# EUROPEAN PATENT SPECIFICATION

(11) **EP 0 581 447 B1**
(45) Date of publication and mention of the grant of the patent: **31.03.1999**
(21) Application number: 93305130.2
(22) Date of filing: 30.06.1993
(51) Int. Cl.: H04N 3/15

(54) **Residual image reduction apparatus for a linear image sensor**
Restbildreduktionsgerät für einen linearen Bildsensor
Appareil de réduction d'image résiduelle pour un capteur d'image linéaire

(30) Priority: 27.07.1992 JP 199310/92
(43) Date of publication of application: 02.02.1994
(73) Proprietor: NIKON CORPORATION, Tokyo (JP)
(72) Inventor: Takahashi, Masami, Kanagawa-ken (JP)
(74) Representative: Burke, Steven David

(56) References cited:
- EP-A- 0 026 380
- EP-A- 0 456 451
- US-A- 5 105 277

## Description

### BACKGROUND OF THE INVENTION

### Field of the Invention

The present invention relates to a residual image reduction apparatus for a linear image sensor used in an image scanner.

### Related Background Art

A CCD (Charge Coupled Device) has been known as a linear image sensor used for an image scanner. The CCD has a residual image phenomenon in which previous line data remains in an output data of a line read after the previous line. This is because the charges generated by the photo-electric conversion in the charge storage unit of the CCD cannot be perfectly transferred to the charge transfer unit.

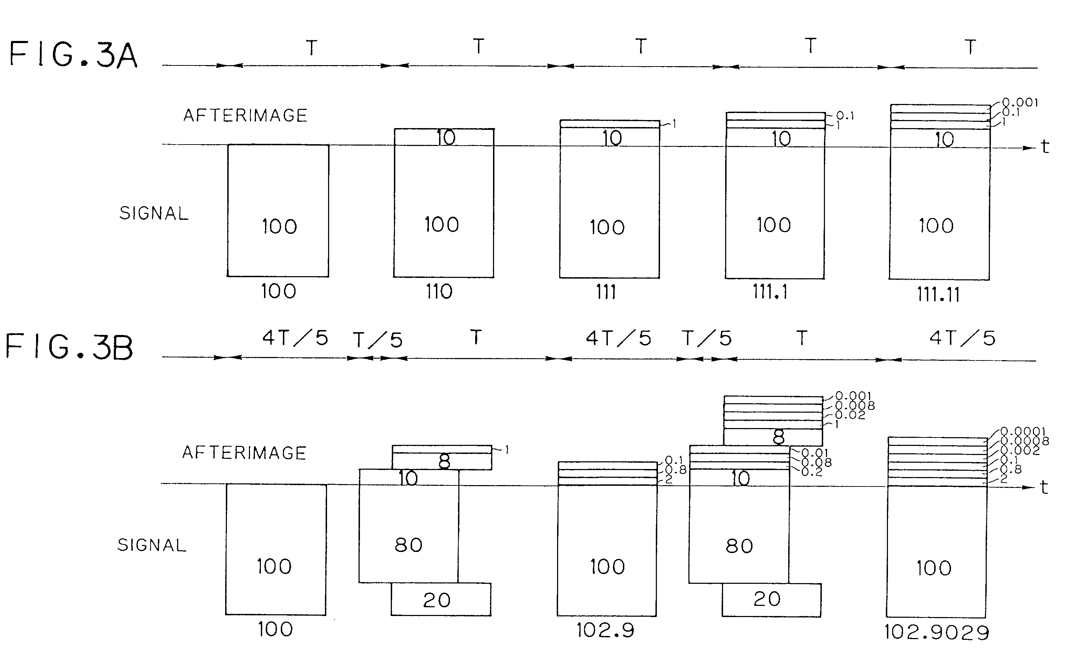

The residual image phenomenon appears as a signal overlapped on one line of output data as shown in Fig. 3A and it lowers the resolution power.

In Fig. 3A, assuming that the charges newly generated by the photo-electric conversion in the charge storage unit of the CCD in a period T are 100 and the charges remaining untransferred to the charge transfer unit (residual component) are 10 (10% of 100), the charges at the transfer storage unit a period T after a certain time are 100 plus 10, that is, 110.

In the next period T, the charges are 100 plus 10 plus 1 (10% of 10), that is, 111. By the repetition of the above, it meas that the charges of 111.11 are outputted as the image data at the start of the fifth period. This extremely lowers the resolution power.

As a method for reducing the effect of the residual image, it has been proposed to shut the light for several lines after the exposure of one line to sweep out the residual image component.

However, in the above method of shutting the light for several lines after the exposure of one line to sweep out the charges of the residual image, no output data is produced for the time of several lines during which the charges of the residual image are swept out and a data read rate is lowered.

EP-A-0456451 describes an image reading apparatus in which a solid state image sensor is controlled so as to transfer out a first light information signal integrated during a first interval, and to transfer out a second light information signal integrated during a second interval, and including a residual image signal from the first light information signal. Thus, the dark portion of the image signal can be read as well as the bright image portion by the processing circuitry.

US-A-5,105,277 describes a linear image sensor having a two stage transfer circuit in which split clock transistor actuating passes are used to cancel cell-to-cell variations and neutralise undesired couplings of the rising edge of the charges into the transistors. Only one transfer from a storage circuit is performed per video output period.

### SUMMARY OF THE INVENTION

It would be beneficial to improve a data read rate by sweeping out the charges of residual image in a short time.

In accordance with the present invention there is provided a residual image reduction apparatus for a linear image sensor, comprising:
a charge storage unit for photo-electrically converting light to charges and storing the charges;
a charge transfer unit for sequentially transferring the charges during charge transfer operations to produce a valid image signal and an invalid image signal;
a shift electrode for shifting the charges stored in said charge storage unit to said charge transfer unit by charge shift operations; and
a shift electrode and charge transfer control circuit for controlling the operations of said shift electrode and said charge transfer unit,
wherein said shift electrode and charge transfer control circuit is for carrying out, in an image read period, an image read operation by performing a first charge shift operation to shift charges stored during a valid charge storage period in said charge storage unit to said charge transfer unit and by performing a first charge transfer operation to produce said valid image signal,
and wherein said shift electrode and charge transfer control circuit is for carrying out, in a residual image charge sweep-out period, a residual image charge sweep-out operation by performing a plurality of further charge shift operations to shift charges stored in said charge storage unit to said charge transfer unit to produce said invalid image signal, said plurality of further charge shift operations being performed before a subsequent valid charge storage operation during which charges associated with said valid image signal are stored in said charge storage unit,
characterised in that said plurality of further charge shift operations are separated by a period which is shorter than said valid charge storage period.

The present invention also provides a residual image reduction method for a linear image sensor, comprising the steps of:
photo-electrically converting light to charges and storing the charges in a charge storage unit, sequentially transferring the charges in a charge transfer unit during charge transfer operations to produce a valid image signal and an invalid image signal;
shifting the stored charges stored in said charge storage unit to said charge transfer unit by charge shift operations of a shift electrode; and controlling the operations of said shift electrode and said charge transfer unit,
wherein said shift electrode and charge transfer control step comprises carrying out, in an image read period, an image read operation by performing a first charge shift operation to shift charges stored in said charge storage unit to said charge transfer unit and by performing a first charge transfer operation to produce a valid image signal,
and wherein said shift electrode and charge transfer control step further comprises carrying out, in a residual image charge sweep-out period, a residual image charge sweep-out operation by performing a plurality of further charge shift operations to shift charges stored during a valid charge storage period in said charge storage unit to said charge transfer unit and by transferring said charges in said transfer unit to produce said invalid image signal, said plurality of further charge shift operations are performed before a subsequent valid storage period during which charges associated with said valid image signal are stored in said charge storage unit,
characterised in that said plurality of further charge shift operations are separated by a period which is shorter than said valid charge storage period.

In the residual image reduction apparatus and method of the linear image sensor of the present invention, the charges of the residual image can be swept out in a short time by the residual image charge sweep-out operation in which the shift electrode is turned on and the charges stored in the charge storage unit are shifted to the charge transfer unit several times. As a result, the time required to sweep out the charges of the residual image is shortened and the remaining time can be used to read the image data. Consequently, the data read rate is improved.

### BRIEF DESCRIPTION OF THE DRAWINGS

Fig. 1 shows a block diagram of one embodiment of a residual image reduction apparatus for a linear image sensor of the present invention.

Fig. 2 shows waveforms for explaining an operation of the residual image reduction apparatus for the linear image sensor of the present invention; and

Figs. 3A and 3B show conceptual views of the operations of the residual image reduction apparatus of the present invention and a prior art apparatus, respectively.

### DETAILED DESCRIPTION OF THE PREFERRED EMBODIMENTS

An embodiment of the present invention is now explained with reference to the drawings.

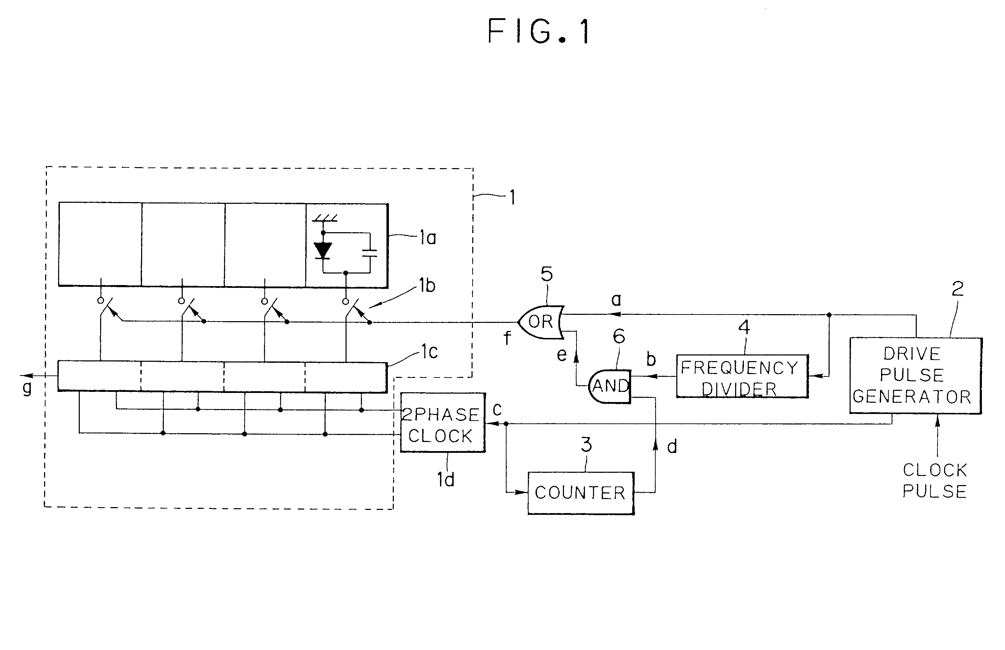

Fig. 1 shows a block diagram of one embodiment of the residual image reduction apparatus for the linear image sensor of the present invention.

In Fig. 1, numeral 1 denotes a CCD linear sensor which comprises a charge storage unit 1a, a shift electrode 1b and a charge transfer unit 1c. The CCD linear sensor 1 is driven by a pulse signal f and a clock signal c supplied from a drive pulse generator 2.

Each cell of the charge storage unit 1a is principally equivalent to a parallel circuit of a photo-diode and a capacitor, and a plurality of such parallel circuits are arranged in line to form the charge storage unit 1a. In the charge storage unit 1a, an input light is converted to charges by the photo-electric conversion action of the photo-diode and the converted charges are stored in the capacitor. The charges stored in the capacitor are shifted to a charge transfer unit 1c through a shift electrode 1b at a predetermined timing. The shift electrode is equivalent to a switching circuit, and when the switching circuit is turned on, the charges stored in the charge storage unit 1a are shifted to the charge transfer unit 1c. A timing to turn on the switching circuit of the shift electrode 1b is determined by the pulse signal f supplied from the drive pulse generator 2 through an OR circuit 5 as will be described later.

The charge transfer unit 1c comprises an analog shift register which sequentially transfers the charges in accordance with a two-phase clock signal to produce a signal g. A two-phase clock generator 1d generates the two-phase clock signal to be supplied to the charge transfer unit 1c based on the clock signal c supplied from the drive pulse generator 2.

In Fig. 1, the charge storage unit 1a, the shift electrode 1b and the charge transfer unit 1c are shown as if they comprise four cells but in actual they have 5000 cells, for example, arranged in line.

The pulse signal f and the clock signal c supplied to the CCD linear sensor are generated in the manner described below.

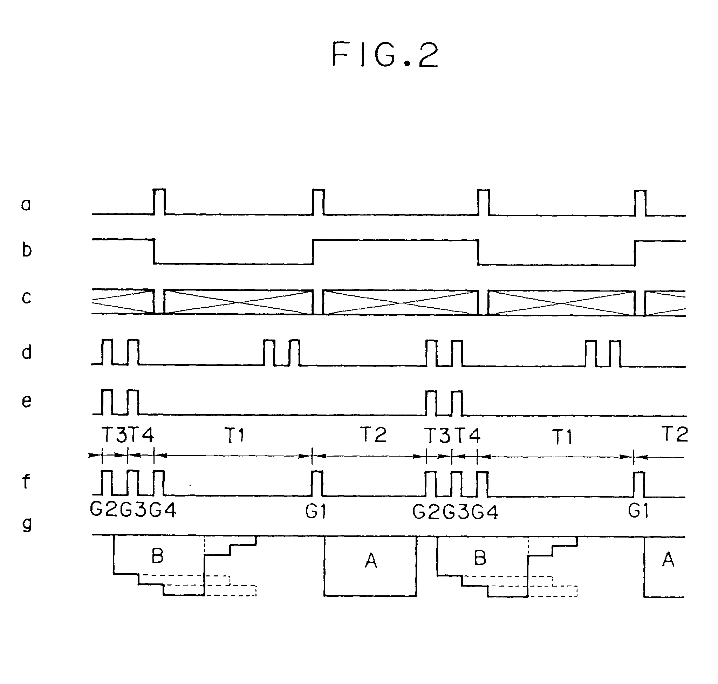

A clock pulse signal of a fixed frequency is applied to the drive pulse generator 2 from a clock pulse generator, not shown. The drive pulse generator generates a pulse signal required for driving the CCD linear sensor 1 based on the clock pulse signal supplied thereto and supplies it to the OR circuit 5, a frequency divider 4, a counter 3 and the two-phase clock generator 1d. A pulse signal a shown in Fig. 2 is supplied to the OR circuit 5 and the frequency divider 4, and the clock pulse c shown in Fig. 2 is supplied to the counter 3 and the two-phase clock generator 1d.

The frequency divider 4 frequency-divides the pulse signal a to produce a pulse signal b which is supplied to an AND circuit 6. The counter 3 counts the clock signal c to produce a pulse signal d which is supplied to the AND circuit 6. The AND circuit 6 ANDs the pulse signal b and the pulse signal d to produce a pulse signal e which is supplied to the OR circuit 5. The OR circuit 5 ORs the pulse signal a supplied from the drive pulse generator 2 and the pulse signal e supplied from the AND circuit 6 to produce a pulse signal f to control the turn-on and turn-off of the shift electrode 1b.

By controlling the turn-on and turn-off of the shift electrode 1b by the pulse signal f, the operation to shift the charges stored in the charge storage unit 1a to the charge transfer unit is controlled. The charges stored in the charge storage unit 1a at a period of T1 of the pulse signal f shown in Fig. 2 are shifted to the charge transfer unit 1c at a time G1. Similarly, the charges stored in the charge storage unit 1a at a period of T2 are shifted to the charge transfer unit 1c at a time G2, the charges stored in the charge storage unit 1a at a period of T3 are shifted to the charge transfer unit 1c at a time G3, and the charges stored in the charge storage unit 1a at a period of T4 are transferred to the charge transfer unit at a time G4.

The charge transfer unit 1c sequentially transfers the charges shifted through the charge transfer unit 1c by the two-phase clock signal. Since the two-phase clock signal is continuously supplied to the charge transfer unit 1c from the two-phase clock generator 1d, the charge transfer unit 1c eventually produces a signal g shown in Fig. 2. Of the signal g shown in Fig. 2, a signal A corresponds to the charges stored in the charge storage unit 1a at the period T1 and shifted to the charge transfer unit 1c at the time G1. Namely, the signal A is one line of output image data.

Of the signal g, a signal B corresponds to the charges stored in the charge transfer unit 1a in the periods T2 - T4 and shifted to the charge transfer unit 1c over three times of the timers G2 - G4. Namely, the signal B is the superposition of the signal corresponding to the image data and the signal corresponding to the residual image. The signal A and the signal B are separated by time and the only the signal A is externally outputted as the image data.

As described above, the signal B includes the signal corresponding to the residual image after one line of image data has been read. Since the charges are shifted to the charge transfer unit 1c over three times of short period G2 - G4, the signal B is the superposition of the three signals including the residual image signal as shown by a broken line in Fig. 2. By shifting the charges from the charge storage unit 1a to the charge transfer unit 1c a plurality of times in a short time, the charges of the residual image can be swept out in a short time. This is explained in conjunction with Figs. 3A and 3B. Fig. 3B differs from Fig. 2 in that the signal including the residual image component is swept out over two times.

In Fig. 3A, it is assumed that the charges newly generated by the photo-electric conversion in the charge storage unit 1a in the period T are 100, and the charges remained without being shifted to the charge transfer unit 1c (residual image component) are 10 (10% of 100).

In Fig. 3B, it is assumed that the charges of 100 are swept out at a certain period (first period). A period from the end of the first period to a second period is assigned to the sweep-out of the charges of the residual image. Theoretical amount of charges to be swept out a 4T/5 period after the first period as a first sweep-out is 80. The charges of 10 remains as the residual image. Theoretical amount of charges to be swept out a T period after the first period as a second sweep-out is 20 but the charges of 8 (10% of 80) which are the residual image component of the previous sweep-out and the charge of 1 (10% of 10) are also subject of the sweep-out.

In a third period, theoretical amount of charges to be swept out is 102.9 (100 + 2 + 0.8 + 0.1). The charges of 2 (10% of 20), 0.8 (10% of 8) and 0.1 (10% of 1) are residual image component of the previous sweep-out (second sweep-out). The amount of charges swept out in the third period as the image data is 102.9 and the effect by the residual image is very small. Comparing it with the example of Fig. 3A, the amount of charges swept out in the third period as the image data in Fig. 3A is 110, which includes much more effect of the residual image than the amount of charges of 102.9 in Fig. 3B.

Similarly, the amount of charges swept out in the third period as the image data in Fig. 3B is 102.9029 which includes a very small effect of the residual image. Comparing it with the example of Fig. 3A, the amount of charges swept out in the third period as the image data in Fig. 3A is 111, which includes much more effect by the residual image.

As described above, in a certain period, the charges are shifted from the charge storage unit 1a to the charge transfer unit 1c at the time G1 to read as the image data, and in other period, the charges are shifted from the charge storage unit 1a to the charge transfer unit 1c over three times of G2 - G4 to sweep out the residual image components. Accordingly, the charges of the residual image can be swept out in a short period of one period.

In accordance with the residual image reduction apparatus for the linear image sensor of the present invention, the residual image sweep-out operation is carried out by turning on the shift electrode to shift the charges stored in the charge storage unit to the charge transfer unit over several times so that the charges of the residual image can be swept out in a short period. Thus, the time required to sweep out the charges of the residual image is shortened and the remaining time can be used to read the image data. As a result, the data read rate is improved.

## Claims

1. A residual image reduction apparatus for a linear image sensor, comprising:
a charge storage unit (1a) for photo-electrically converting light to charges and storing the charges;
a charge transfer unit (1b) for sequentially transferring the charges during charge transfer operations to produce a valid image signal and an invalid image signal;
a shift electrode (1c) for shifting the charges stored in said charge storage unit to said charge transfer unit by charge shift operations; and
a shift electrode and charge transfer control circuit (2,3,4,5) for controlling the operations of said shift electrode and said charge transfer unit,
wherein said shift electrode and charge transfer control circuit (2,3,4,5) is for carrying out, in an image read period, an image read operation by performing a first charge shift operation to shift charges stored during a valid charge storage period in said charge storage unit (1a) to said charge transfer unit (1b) and by performing a first charge transfer operation to produce said valid image signal,
and wherein said shift electrode and charge transfer control circuit (2,3,4,5) is for carrying out, in a residual image charge sweep-out period, a residual image charge sweep-out operation by performing a plurality of further charge shift operations to shift charges stored in said charge storage unit (1a) to said charge transfer unit (1b) to produce said invalid image signal, said plurality of further charge shift operations being performed before a subsequent valid charge storage operation during which charges associated with said valid image signal are stored in said charge storage unit (1a),
characterised in that said plurality of further charge shift operations are separated by a period which is shorter than said valid charge storage period.

2. Apparatus according to claim 1, wherein the residual charges stored in said charge storage unit (1a) after each of said further charge shift operations, respectively, decreases during said residual image charge sweep-out operation.

3. Apparatus according to claim 1 or 2, wherein said plurality of further charge shift operations are begun immediately after said image read period.

4. A residual image reduction method for a linear image sensor, comprising the steps of:
photo-electrically converting light to charges and storing the charges in a charge storage unit (1a), sequentially transferring the charges in a charge transfer unit (1b) during charge transfer operations to produce a valid image signal and an invalid image signal;
shifting the stored charges stored in said charge storage unit (1a) to said charge transfer unit (1b) by charge shift operations of a shift electrode (1c) ; and
controlling the operations of said shift electrode (1c) and said charge transfer unit (1b),
wherein said shift electrode and charge transfer control step comprises carrying out, in an image read period, an image read operation by performing a first charge shift operation to shift charges stored in said charge storage unit (1a) to said charge transfer unit (1b) and by performing a first charge transfer operation to produce a valid image signal,
and wherein said shift electrode and charge transfer control step further comprises carrying out, in a residual image charge sweep-out period, a residual image charge sweep-out operation by performing a plurality of further charge shift operations to shift charges stored during a valid charge storage period in said charge storage unit (1a) to said charge transfer unit and by transferring said charges in said transfer unit (1b) to produce said invalid image signal, said plurality of further charge shift operations are performed before a subsequent valid storage period during which charges associated with said valid image signal are stored in said charge storage unit (1a),
characterised in that said plurality of further charge shift operations are separated by a period which is shorter than said valid charge storage period.

5. A method according to claim 4, wherein the residual charges stored in said charge storage unit (1a) after each of said further charge shift operations, respectively, decreases during said residual image charge sweep-out operation.

6. A method according to claim 4 or 5, wherein said plurality of further charge shift operations are begun immediately after said image read period.

## Patentansprüche

1. Restbildreduktionseinrichtung für einen linearen Bildsensor, umfassend:
- eine Ladungsspeichereinheit (1a) zum photoelektrischen Umwandeln von Licht in Ladungen und Speichern der Ladungen;
- eine Ladungstransfereinheit (1b) zum sequentiellen Transferieren der Ladungen während Ladungstransferoperationen, um ein zulässiges Bildsignal und ein unzulässiges Bildsignal zu erzeugen;
- eine Verschiebungselektrode (1c) zum Verschieben der in der Ladungsspeichereinheit gespeicherten Ladungen zu der Ladungstransfereinheit durch Ladungsverschiebeoperationen;
- eine Verschiebungselektroden- und Ladungstransfer-Steuerschaltung (2, 3, 4, 5) zum Steuern der Operationen der Verschiebungselektrode und der Ladungstransfereinheit,
- wobei die Verschiebungselektroden- und Ladungstransfer-Steuerschaltung (2 3, 4, 5) dazu dient, in einer Bildlesezeitspanne eine Bildleseoperation dadurch auszuführen, daß eine erste Ladungsverschiebeoperation durchgeführt wird, um Ladungen, die während einer zulässigen Ladungsspeicherzeitspanne in der Ladungsspeichereinheit (1a) gespeichert wurden, zu der Ladungstransfereinheit (1b) zu verschieben, und indem eine erste Ladungstransferoperation durchgeführt wird, um das zulässige Bildsignal zu erzeugen,
- und wobei die Verschiebungselektroden- und Ladungstransfer-Steuerschaltung (2, 3, 4, 5) dazu dient, in einer Restbild-Ladungsbeseitigungszeitspanne einen Restbild-Ladungsbeseitigungsvorgang durchzuführen, indem eine Mehrzahl weiterer Ladungsverschiebeoperationen durchgeführt werden, um Ladungen, die in der Ladungsspeichereinheit (1a) gespeichert sind, zu der Ladungstransfereinheit (1b) zu verschieben und dadurch das unzulässige Bildsignal zu erzeugen, wobei die mehreren zusätzlichen Ladungsverschiebeoperationen durchgeführt werden, bevor eine nachfolgende zulässige Ladungsspeicheroperation stattfindet, während der zu dem zulässigen Bildsignal gehörige Ladungen in der Ladungsspeichereinheit (1a) abgespeichert werden,
dadurch gekennzeichnet, daß
- die mehreren weiteren Ladungsverschiebeoperationen durch eine Zeitspanne voneinander getrennt sind, die kürzer ist als die zulässige Ladungsspeicherzeitspanne.

2. Vorrichtung nach Anspruch 1, bei der
die in der Ladungsspeichereinheit (1a) nach jeder der weiteren Ladungsverschiebeoperationen gespeicherten Restladungen während der Restbild-Ladungsbeseitigungsoperation abnehmen.

3. Vorrichtung nach Anspruch 1 oder 2, bei der
die mehreren weiteren Ladungsverschiebeoperationen unmittelbar im Anschluß an die Bildlesezeitspanne beginnen.

4. Restbildreduktionsverfahren für einen linearen Bildsensor, umfassend die Schritte:
- Photoelektrisches Umwandeln von Licht in Ladungen und Speichern der Ladungen in einer Ladungsspeichereinheit (1a), sequentielles Transferieren der Ladungen in einer Ladungsspeichereinheit (1b) während Ladungstransferoperationen, um ein zulässiges Bildsignal und ein unzulässiges Bildsignal zu erzeugen;
- Verschieben der in der Ladungsspeichereinheit (1a) gespeicherten Ladungen zu der Ladungstransfereinheit (1b) durch Ladungsverschiebeoperationen einer Verschiebungselektrode (1c); und
- Steuern der Operationen der Verschiebungselektrode (1c) und der Ladungstransfereinheit (1b),
- wobei der Schritt der Verschiebungselektroden- und Ladungstransfersteuerung beinhaltet, in einer Bildlesezeitspanne eine Bildleseoperation auszuführen, indem eine erste Ladungsverschiebeoperation durchgeführt wird, um in der Ladungsspeichereinheit (1a) gespeicherte Ladungen in die Ladungstransfereinheit (1b) zu verschieben, und eine erste Ladungstransferoperation durchgeführt wird, um ein zulässiges Bildsignal zu erzeugen, und - wobei der Schritt der Verschiebungselektroden- und Ladungstransfersteuerung weiterhin beinhaltet, innerhalb einer Restbild-Ladungsbeseitigungszeitspanne eine Restbild-Ladungsbeseitigungsoperation auszuführen, indem mehrere weitere Ladungsverschiebeoperationen durchgeführt werden, um Ladungen, die während einer zulässigen Ladungsspeicherzeitspanne in der Ladungsspeichereinheit (1a) gespeichert wurden, zu der Ladungstransfereinheit zu verschieben, und die Ladungen in der Transfereinheit (1b) zu verschieben, um das unzulässige Bildsignal zu erzeugen, wobei die mehreren weiteren Ladungsverschiebeoperationen vor einer nachfolgenden zulässigen Speicherzeitspanne durchgeführt werden, während der Ladungen, die zu den zulässigen Bildsignalen gehören, innerhalb der Ladungsspeichereinheit (1a) gespeichert werden,
dadurch gekennzeichnet, daß
- die mehreren weiteren Ladungsverschiebeoperationen durch eine Zeitspanne getrennt sind, die kürzer ist als die zulässige Ladungsspeicherzeitspanne.

5. Verfahren nach Anspruch 4, bei dem
die in der Ladungsspeichereinheit (1a) nach jeder weiteren Ladungsverschiebeoperation gespeicherten Restladungen jeweils während der Restbild-Ladungsbeseitigungsoperation abnehmen.

6. Verfahren nach Anspruch 4 oder 5, wobei
die mehreren weiteren Ladungsverschiebeoperationen unmittelbar im Anschluß an die Bildlesezeitspanne beginnen.

## Revendications

1. Dispositif de réduction de l'image résiduelle pour un capteur d'image linéaire, comprenant :
une unité (1a) de stockage de charges pour la conversion photoélectrique d'une lumière en des charges et la mémorisation des charges;
une unité (1b) de transfert de charges pour transférer séquentiellement les charges pendant des opérations de transfert de charges pour produire un signal d'image valable et un signal d'image non valable;
une électrode de décalage (1c) pour décaler les charges stockées dans ladite unité de stockage de charges à ladite unité de transfert de charges au moyen d'opérations de décalage de charges; et
un circuit (2,3,4,5) de commande de l'électrode de décalage et de l'unité de transfert de charges pour commander les opérations de ladite électrode de décalage et de ladite unité de transfert de charges,
dans lequel ledit circuit (2,3,4,5) de commande de l'électrode de décalage et de l'unité de transfert de charges sert à exécuter, pendant une période de lecture d'image, une opération de lecture d'image moyennant l'exécution d'une première opération de décalage de charges pour décaler des charges stockées pendant une période de stockage de charges valable dans ladite unité de stockage de charges (1a) jusqu'à ladite unité de transfert de charges (1b) et par exécution d'une première opération de transfert de charges pour produire ledit signal d'image valable, et
dans lequel ledit circuit (2,3,4,5) de commande de l'électrode de décalage et de l'unité de transfert de charges sert à exécuter, pendant une période d'évacuation par balayage de charges de l'image résiduelle, une opération d'évacuation par balayage de charges d'image résiduelle moyennant l'exécution d'une pluralité d'opérations supplémentaires de décalage de charges pour décaler des charges stockées dans ladite unité de stockage de charges (1a) jusqu'à ladite unité de transfert de charges (1b) pour produire ledit signal d'image non valable, ladite pluralité d'opérations supplémentaires de décalage de charges étant exécutées avant une opération suivante de stockage de charges valable pendant laquelle des charges associées audit signal d'image valable sont stockées dans ladite unité de stockage de charges (1a),
caractérisé en ce que ladite pluralité d'autres opérations de décalage de charges sont séparées par une période qui est inférieure à ladite période de stockage de charges valable.

2. Dispositif selon la revendication 1, dans lequel les charges résiduelles stockées dans ladite unité de stockage de charges (1a) après respectivement chacune desdites opérations supplémentaires de décalage de charges diminuent pendant ladite opération d'évacuation par balayage des charges d'image résiduelle.

3. Dispositif selon la revendication 1 ou 2, dans lequel ladite pluralité d'opérations supplémentaires de décalage de charges commencent juste après ladite période de lecture d'image.

4. Procédé de réduction de l'image résiduelle pour un capteur d'image linéaire, comprenant les étapes consistant à :
convertir par voie photoélectrique une lumière en des charges et stocker les charges dans une unité de stockage de charges (1a), transférer séquentiellement les charges dans une unité de transfert de charges (1b) pendant des opérations de transfert de charges pour produire un signal d'image valable et un signal d'image non valable;
décaler les charges stockées dans ladite unité de stockage de charges (1a) jusqu'à ladite unité de transfert de charges (1b) au moyen d'opérations de décalage de charges d'une électrode de décalage (1c); et
commander les opérations de ladite électrode de décalage (1c) et de ladite unité de transfert de charges (1b),
dans lequel ladite étape de commande de l'électrode de décalage et de l'unité de transfert de charges comprend l'exécution, pendant une période de lecture d'image, d'une opération de lecture d'image par exécution d'une première opération de décalage de charges pour décaler les charges stockées dans ladite unité de stockage de charges (1a) jusqu'à ladite unité de transfert de charges (1b), et par l'exécution d'une première opération de transfert de charges pour produire un signal d'image valable; et
dans lequel ladite électrode de décalage et ladite étape de commande de transfert de charges comprennent en outre l'exécution, pendant une période d'évacuation par balayage de charges d'une image résiduelle, une opération d'évacuation par balayage de charges de l'image résiduelle par exécution d'une pluralité d'opérations supplémentaires de décalage de charges pour décaler des charges stockées pendant une période de stockage de charges valable dans ladite unité de stockage de charges (1a) jusqu'à ladite unité de transfert de charges et par transfert desdites charges dans ladite unité de transfert de charges (1b) pour la production dudit signal d'image non valable, ladite pluralité d'opérations supplémentaires de décalage de charges étant exécutées avant une période suivante de stockage valable, pendant laquelle des charges associées audit signal d'image valable sont stockées dans ladite unité de stockage de charges (1a),
caractérisé en ce que ladite pluralité d'autres opérations de décalage de charges sont séparées par une période qui est inférieure à ladite période de stockage de charges valable.

5. Procédé selon la revendication 4, selon lequel les charges résiduelles stockées dans ladite unité de stockage de charges (1a) après chacune desdites opérations supplémentaires de décalage de charges diminuent respectivement pendant ladite opération d'élimination par balayage de charges d'image résiduelle.

6. Procédé selon la revendication 4 ou 5, selon lequel ladite pluralité d'opérations supplémentaires de décalage de charges commencent juste après ladite période de lecture d'image.
